# EUROPEAN PATENT APPLICATION

(11) **EP 2 966 870 A1**
(43) Date of publication of application: **13.01.2016**
(21) Application number: 15167351.4
(22) Date of filing: 12.05.2015
(51) Int. Cl.: H04N 21/41, G06Q 30/00, H04N 21/442, H04N 21/81, H04N 21/433, H04N 21/414, H04N 21/2547

(54) **ADVERTISEMENT SYSTEM USING CONNECTION SIGNAL OF AUDIO OUTPUT DEVICE IN DIGITAL DEVICE AND METHOD FOR THE SAME**

(30) Priority: 11.07.2014 KR 20140087562
(71) Applicant: Lee, Hyuckjae, Gyeonggi-do (KR)
(72) Inventor: Lee, Hyuckjae, Gyeonggi-do (KR)
(74) Representative: Gulde & Partner

(57) **Abstract**

An advertisement system using a connection signal of an audio output device of a digital device may include a connector section to which the audio output device is to connected; a connection signal receiver section that detects the signals when the audio output device is connected to the connector section; and an advertisement output section that outputs an advertisement when the connection signal receiver section detects the connection signal.

## Description

### Technical Field

Embodiments of the present invention relate to an advertisement system and a method for the advertisement system to expose advertisements such as audios, videos, images, texts, messages, etc. to a digital device such as smartphone, computer, tablet PC, MP3 player, etc. using the electronic connection signal generated when connecting an audio output device such as earphone, headphone, loudspeaker, etc. to the digital device.

### Background Art

Recently, as digital devices are commonly used, people usually make a phone call or use audio and/or video content, on the move, at leisure or even at work, via audio output devices, especially when they very frequently make a telephone call, listen to music or watch TV from their smartphone via earphones during a commute. For this purpose, the user may connect an audio output device to a digital device and there may be an idle time before actually operating the digital device, or a certain period of time before or after the connecting and before executing the content during which the user searches the content along a due path. It may be possible, during the idle time or the certain period of time, to provide an audio advertisement and/or a video, an image, a text or URL according to the display properties of the digital device.

For example, for a metro commuter to listen to music from his or her smartphone, he or she connects an earphone terminal to the smartphone, plugs the earbuds to his or her earholes, executes a music-related application on the smartphone display and selects the music file he or she desires. It may take an idle time that ranges from dozens of seconds up to a few minutes before the initial execution of a music file from connecting the earphone terminal to the smartphone, which may be used for an automatic exposure of an audio advertisement and/or various forms of digital advertisements including video, image, text, URL, message, etc.

Diverse and novel forms of advertisements come along as digital devices develop. Particularly, a smartphone boasts various methods of advertisements specific to the device including idle screen advertisements during phone call receiving or sending, idle screen advertisements, mobile application banners, text messages, reward types, event participation types, polls, etc.

A banner or pop-up advertisement that turns up on the Internet browser of a PC or an application of a smartphone may, in general, arouse rejection of the user because the user is to be exposed to the advertisement in the middle of the content they desire to execute.

Moreover, on the Internet, a user may compulsively watch an advertisement video before the content is executed as he or she desires to watch, which may also arouse rejection and prohibit the user from concentrating on the content because the user has beforehand determined what to watch. For example, when a user attempts to watch *Gangnam Style* music video of *Psy,* he or she sometimes is to be exposed to an advertisement video before the watching, which may stimulate rejection.

Therefore, such a situation may require an advertisement system and a method for the advertisement system that automatically exposes an advertisement to a user by using a connection signal generated when connecting an audio output device to a digital device. Correspondingly, an embodiment of the present invention provides, taking into account the situation that a single person uses an audio output device up to dozens of times a day, an advertisement system and a method for the advertisement system that exposes a digital advertisement with a high degree of concentration for an idle time during which a digital device is connected to an audio output device and stands by.

### Disclosure of Invention

### Technical Problem

An embodiment of the present invention provides an advertisement system and a method for the advertisement system, for an idle time before executing the content a user wants to play, to expose advertisements such as audios, videos, images, texts, URLs, messages, etc. to a digital device such as smartphone, computer, tablet PC, MP3 player, etc. using the electronic connection signal generated when connecting an audio output device such as earphone, headphone, loudspeaker, etc. to the digital device.

The problems the present invention is to solve are not limited to the said problems and any other problem will be clarified for a person skilled in the art of the present invention based on the description that will be detailed below.

### Technical Solution

An advertisement system using a connection signal of an audio output device of a digital device according to an embodiment of the present invention includes a connector section to which the audio output device is to connected; a connection signal receiver section that detects the signals when the audio output device is connected to the connector section; and an advertisement output section that outputs an advertisement when the connection signal receiver section detects the connection signal.

An advertisement system using a connection signal of an audio output device of a digital device according to another embodiment of the present invention may additionally include an advertisement controller section that receives the connection signal detected by the connection receiver section and transmits a resulting value according to the exposure condition of the advertisement to expose; an advertisement exposure controller section that receives the resulting value from the advertisement controller section and transmits to the advertisement output section an advertisement output command according to the resulting value; and an advertisement storage section that stores a plurality of advertisements, wherein the advertisement output section receives the advertisement output command from the advertisement exposure controller section and outputs the advertisement, stored in the advertisement storage section, to expose according to the advertisement exposure condition.

The advertisement controller section controls the advertisement exposure so that the duration from detecting the connection signal to beginning to expose the advertisement is modified.

The advertisement controller section controls the advertisement exposure so that, upon detecting the connection signal, the number of consecutive exposures of the advertisement is modified.

The advertisement controller section controls the advertisement exposure so that, if the audio output device is disconnected after outputting the advertisement and, after a certain period of time, the connection signal is detected when the audio output device is connected again, the continuous advertisement exposure time that is defined as the duration from the time the advertisement was finished to the time the advertisement will be output again is modified.

The advertisement controller section controls the advertisement exposure so that, when the connection signal is detected, the maximum number of advertisement output times is modified being limited with reference to the number of the audio output device is connected or a predetermined advertisement exposure number.

The advertisement controller section controls the advertisement exposure so that, if detecting the connection signal, the advertisement is not exposed if a specific audio or video program is being played in the digital device.

The advertisement storage section, if the advertisement storage section is embedded in the digital device, downloads an advertisement from an advertisement server and stores the advertisement via wireless communication with the advertisement server during an idle time whereas the advertisement output section, if the advertisement storage section and the advertisement controller section are embedded in the advertisement server, directly calls, downloads in real time and outputs an advertisement stored in the advertisement storage section in the advertisement server by linking the advertisement server to the advertisement exposure controller section via the advertisement controller section.

The advertisement output section modifies, when downloading an advertisement from the advertisement server, the targeting information of the advertisement based on the personal information including at least one among mobile carrier, mobile terminal, list of installed applications, date, month and year of birth and gender.

An advertisement system using a connection signal of an audio output device of a digital device according to a still another embodiment of the present invention may even additionally includes an advertisement reporting section that generates report data on the advertisement that has been output by the advertisement output section; and an advertisement report storage section that stores the reporting data generated by the advertisement reporting section.

An advertisement system using a connection signal of an audio output device of a digital device according to a further embodiment of the present invention may further additionally include a billing section that levies a charge according to the playback time of an advertisement based on the report data generated by the advertisement reporting section, wherein the billing section levies a charge only when the entire advertisement is played back if the entire playback time of the advertisement is less than the predetermined reference period of time whereas the billing section levies a charge only when an advertisement is played back longer than the predetermined period of time if the entire playback time of the advertisement is equal to or more than the predetermined reference period of time.

An advertisement system using a connection signal of an audio output device of a digital device according to a still further embodiment of the present invention may further additionally include a billing section that, based on the report data generated by the advertisement reporting section, levies a charge at the time a link advertisement is executed when the advertisement link area is selected in the advertisement page regarding the advertisement.

The connection signal is generated by an electronic connection that is a standby state so that the audio output device, when being either physically or logically connected to the digital device, is connected to an audio device recognition module embedded in the digital device in order to output an audio content.

Other embodiments are included in detail in the description and the accompanying drawings of the present specification.

### Advantageous Effects of Invention

An embodiment of the present invention provides an advertisement system and a method for the advertisement system, for an idle time before executing the content a user wants to play, to expose advertisements such as audios, videos, images, texts, URLs, messages, etc. to a digital device such as smartphone, computer, tablet PC, MP3 player, etc. using the electronic connection signal generated when connecting an audio output device such as earphone, headphone, loudspeaker, etc. to the digital device.

### Description of Drawings

FIG 1 is a diagram illustrating a network configuration of an advertisement system using a connection signal of an audio output device of a digital device according to an embodiment of the present invention.
FIG 2 is a block diagram illustrating a detailed configuration of an advertisement system using a connection signal of an audio output device of a digital device according to an embodiment of the present invention.
FIG 3 is a block diagram illustrating a detailed configuration of an advertisement system using a connection signal of an audio output device of a digital device according to another embodiment of the present invention.
FIG 4 is a flowchart for an advertisement method using a connection signal of an audio output device of a digital device according to yet another embodiment of the present invention.

### Mode for Invention

The advantageous effects and features, and methods to achieve the present invention are clarified by the embodiments that will be described in detail with reference to the accompanying drawings. The present invention must not be limited to the embodiments but may be practiced in various, different forms while the embodiments support the completion of the disclosure of the present invention. The embodiments of the present invention are provided to let a person skilled in the art of the present invention recognized the entire scope of the present invention. The present invention must be defined by the scope of the claims of the present invention. An element is designated by an identical reference numeral through the present specification.

An embodiment of the present invention provides, taking into account the situation that a single person uses an audio output device up to dozens of times a day, an advertisement system and a method for the advertisement system that exposes a digital advertisement with a high degree of concentration for an idle time during which a digital device is connected to an audio output device and stands by.

An advertisement using the connection signal of an audio output device does not arouse rejection due to an advertisement exposed to a user after the user determined to play the content. For this purpose, an advertisement such as audio, video, text, etc. is automatically executed within a predetermined period of time if a signal of connecting or driving the audio output device in the digital device is detected. Typically, when a user plans to use an audio output device, it may take an idle time of dozens of seconds up to a few minutes to begin to execute the content as desired after the user connected the audio output device to the digital device.

The idle time occurs in the period during which a user determines the content to execute. In other words, existing mobile and Internet advertisements may arouse rejection because the advertisements appear after the user determined and actually executed the content. The present invention, however, minimizes the rejection to advertisement because an advertisement is exposed before the user determines the content to execute.

Accordingly, the present invention provides a higher degree of concentration on an advertisement and, upon seeing the advertisement, promotes subsequent activities to verify the details of the advertisement, because the situation unfolds before the user finishes determining what to play.

Embodiments of the present invention will now be described in detail with reference to the accompanying drawings.

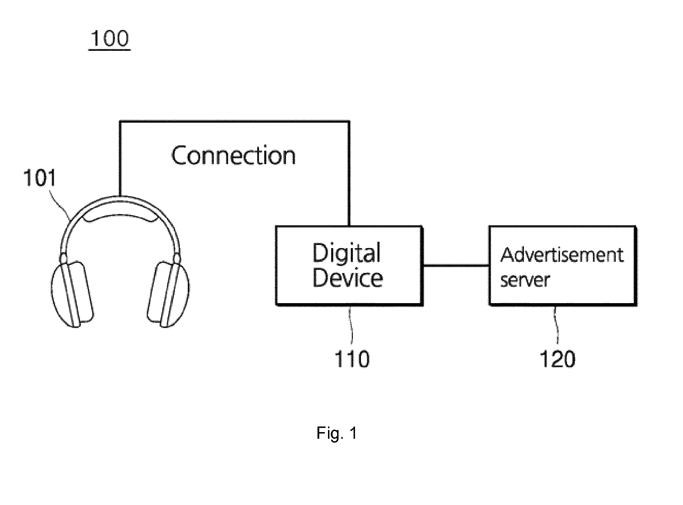

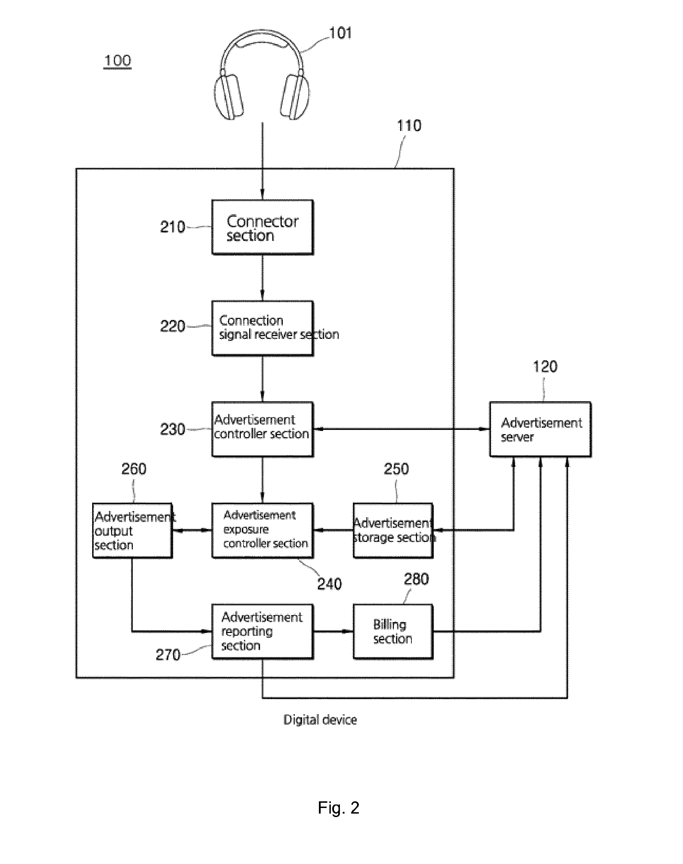

FIG 1 is a diagram illustrating a network configuration of an advertisement system using a connection signal of an audio output device of a digital device according to an embodiment of the present invention and FIG 2 is a block diagram illustrating a detailed configuration of an advertisement system using a connection signal of an audio output device of a digital device according to an embodiment of the present invention, especially illustrating an embodiment for which an advertisement storage section 250 is embedded in the digital device, in other words, the digital device does not use data communication.

As illustrated in FIGs 1 and 2, an advertisement system 100 using a connection signal of an audio output device of a digital device according to an embodiment of the present invention includes a digital device 110 and an advertisement server 120.

The digital device 110 may include a connector section 210, a connection signal receiver section 220, an advertisement controller section 230, an advertisement exposure controller section 240, an advertisement storage section 250, an advertisement output section 260, an advertisement reporting section 270, a billing section 280 and a device that is to be connected to an audio output device 101 such as smartphone, general cell phone, computer, tablet PC, MP3 player, etc.

The connector section 210, to which the audio output device 101 is to be connected, is a physical device into which the jack of the audio output device 101 is plugged or, in other words, the connector of a PC set or smartphone to which the jack, etc. of loudspeakers, earphones or headphones is plugged.

In another condition, the connector section 210 may be a device that is connected to the audio output device 101 via a wireless communication method such as Bluetooth.

For this purpose, the audio output device 101 may include a device such as earphones, headphones, loudspeakers, etc. that outputs an audio signal.

The connection signal receiver section 220 detects a connection signal generated when the audio output device 101 is connected to the connector section 210. More specifically, the connection signal receiver section 220 detects a connection signal that is electronic and verifies that the audio output device 101 is connected to the digital device 110 when the audio output device 101 is physically and electronically connected to the digital device 110. The connection signal receiver section 220 transmits the connection signal thus detected to the advertisement controller section 230.

In this regard, the physical connection is referred to as a connection that plugs the jack of the audio output device 101 into the connector section 210 of the digital device 110 while the electronic connection is referred to as a standby state, after the physical connection is completed, in which the jack of the audio output device 101 is connected to an audio device recognition module in the digital device 110 in order to output an audio content.

For example, most earphones for a smartphone have no internal power supply and a physical connection between the earphones and a smartphone automatically brings about an electronic connection. On the contrary, active loudspeakers that require an extra power supply to be used with a PC set cannot secure an electronic connection by means of a physical connection to the PC set and must have the extra power supply switched on in order to complete an electronic connection.

Therefore, according to an embodiment of the present invention, the connection signal may be required to be generated when an electronic, not physical, connection is completed while, upon detecting the connection signal, the connection signal receiver section 220 may transmit the connection signal to the advertisement controller section 230 so that the advertisement controller section 230 controls an advertisement.

According to another embodiment of the present invention, when the audio output device 101 is logically and electronically connected to the digital device 110 via wireless communication, the connection signal receiver section 220 detects a connection signal, which is electronic, that verifies that the audio output device 101 is connected to the digital device 110 and may transmit the connection signal thus detected to the advertisement controller section 230.

The advertisement controller section 230 receives the connection signal detected by the connection receiver section 220 and transmits to the advertisement exposure controller section 240 a resulting value according to the advertisement exposure condition of the advertisement to expose.

The advertisement exposure condition may include information such as advertiser, advertisement time, advertisement form, advertisement exposure number, priority of advertisement exposure, advertisement target, etc. while, based on the advertisement exposure condition, the advertisement controller section 230 generates, or verifies or modifies, a resulting value and transmits the resulting value to the advertisement exposure controller section 240.

Meanwhile, the advertisement controller section 230 may receive from the advertisement server 120 a control command including the resulting value according to the advertisement exposure condition, and may modify or change the control command and generate a new control command.

The advertisement exposure controller section 240 may receive from the advertisement controller section 230 the resulting value according to the advertisement exposure condition and transmit to the advertisement output section 260 an advertisement output command according to the resulting value. More specifically, the advertisement exposure controller section 240 may receive a control command the advertisement controller section 230 has verified, modified or generated, and transmit to the advertisement output section 260 an advertisement output command that controls the advertisement output, or exposure, according to the control command thus received.

In other words, the advertisement exposure controller section 240 controls, according to the control command thus received, an advertisement stored in the advertisement storage section 250 to be output off the advertisement output section 260.

For this purpose, the advertisement controller section 230 controls the advertisement exposure so that the duration from detecting the connection signal to commencing to expose the advertisement is modified.

More specifically, the advertisement controller section 230 can expose an advertisement at a certain period of time after, neither upon nor immediately after, detecting the connection signal.

For example, when connecting earphones to a smartphone, the advertisement controller section 230 controls an advertisement to be exposed at three or five seconds after the connection.

In addition, the advertisement controller section 230 may control the advertisement exposure so that, if detecting the connection signal, the number of consecutive exposures of an advertisement is modified.

More specifically, the advertisement controller section 230 modifies and controls the number of consecutive exposures of an advertisement when the audio output device 101 is connected to the digital device 110 and the advertisement is exposed.

For example, when connecting earphones to a smartphone, the advertisement controller section 230 controls the number of consecutive exposures of an advertisement the playback time of which is about 15 seconds to one, two, three or else as desired, not to only 1.

In addition, the advertisement controller section 230 controls the advertisement exposure so that, if the audio output device 101 is disconnected after outputting the advertisement and, after a certain period of time, the connection signal is detected when the audio output device is connected again, the continuous advertisement exposure time is modified.

For this purpose, the continuous advertisement exposure time is defined as the duration from the time the advertisement was finished to the time the advertisement will be output again.

For example, a user may connect earphones to a smartphone, be exposed to a single advertisement and after a certain period of time connect again the earphones to the smartphone. If the advertisement is repeatedly exposed to the user whenever the user connects the earphones to the smartphone, the user may feel rejection. With a continuous advertisement exposure time of an hour established, the advertisement controller section 230 controls the advertisement not to be exposed even if the user re-plugs the earphones to the smartphone within an hour after the previous exposure of the advertisement.

In addition, the advertisement controller section 230 controls the advertisement exposure so that, when the connection signal is detected, the maximum number of advertisement output times is modified being limited with reference to the number of connections of the audio output device 101 or a predetermined advertisement exposure number.

In other words, the advertisement controller section 230 can limit, in order to minimize the rejection of a user, the number of advertisement exposures within a specific period of time including 24 hours, one week, one month, etc. If it is configured that the advertisement should be exposed, for example, three times in total within 24 hours, the advertisement controller section 230 is to restrict the advertisement exposure number not to exceed three within 24 hours even when the earphones are connected to the smartphone.

In addition, the advertisement controller section 230 controls the advertisement exposure so that, upon detecting a connection signal, the advertisement is not exposed if a specific audio or video program is being played in the digital device 110.

More specifically, upon earphones being connected to a smartphone, the advertisement controller section 230 controls an advertisement not to be exposed if an audio, a video or a specific application users usually enjoy has already been executed.

For this purpose, the user may register, by certain input activities of the user, the audio, video or specific application in a back-end system and, by integrating to the back-end system, also in the advertisement controller section 230.

The advertisement storage section 250 stores a plurality of advertisements, wherein the advertisement storage section 250 downloads a plurality of advertisements from the advertisement server 120 and stores the advertisements via wireless communication with the advertisement server 120 during an idle time.

The advertisement storage section 250 stores the plurality of advertisements by arranging and matching the plurality of advertisements according to the advertisement exposure conditions such as advertiser, playback time, advertisement form, advertisement exposure number, exposure priority, etc. In other words, the advertisement storage section 250 is referred to as a database DB that stores the advertisement content itself such as audio, video, image, text, URL, message, etc., and the information pertinent to it such as exposure number, advertising target, playback time, priority, advertiser, etc.

The advertisement output section 260 outputs an advertisement when the connection signal receiver section 220 detects a connection signal. More specifically, the advertisement output section 260 receives an advertisement output command from the advertisement exposure controller section 240 and, according to the advertisement exposure conditions, outputs an advertisement that is stored in the advertisement storage section 250 and corresponds to the exposure purpose.

For this purpose, the advertisement output section 260 may output the advertisement to at least one output device among video output device, image output device, text/URL/message output device as well as the audio output device 101 depending on the method by which the digital device 110 displays the advertisement, or the digital content.

The advertisement reporting section 270 generates report data regarding the advertisement output off the advertisement output section 260 and the report data thus generated may be transferred to and stored in the advertisement server 120.

The advertisement server 120 stores and manages advertisements, generates advertisement control information and transfers the advertisement information to the digital device 110 of a user. In this regard, the advertisement server 120 acts similarly as a typical mobile advertisement or a web banner advertisement does.

An advertisement provided by the present invention may assume the form of audio, video, test, URL or message and be stored in a various forms that can be output via a PC set, mobile phone, tablet PC or MP3 player. In addition, the advertisement may be prioritized for exposure according to advertiser, playback time, form, exposure number, etc.

The advertisement server 120 transfers such information to the advertisement storage section 250 and the advertisement controller section 230 of the digital device 110, and, after the advertisement is exposed, receives the advertisement executing results from the advertisement reporting section 270 and stores the report data regarding the advertisement thus executed.

The billing section 280 levies a charge according to the playback time of the advertisement based on the report data the advertisement reporting section 270 generates.

For this purpose, the billing section 280 levies a charge only when the entire advertisement is played back if the entire playback time of the advertisement is less than the predetermined reference period of time whereas the billing section levies a charge only when an advertisement is played back longer than the predetermined period of time if the entire playback time of the advertisement is equal to or more than the predetermined reference period of time.

The billing section 280 may levy a charge at the time a link advertisement is executed when the advertisement link area is selected in the advertisement page regarding the advertisement based on the report data generated by the advertisement reporting section 270.

The advertisement link area may include an advertisement area such as image, text, animation or video. The link advertisement may include linkage to a website that shows advertisement information, execution of an application, linkage to a specific page in an application, making a telephone call, execution of actionscript, text exposure, sound effects, video playback, etc.

For example, to an advertisement such as audio, push, etc. exposed by connecting earphones to a smartphone, the billing section 280 may levy a charge after the entire advertisement is played back if the advertisement playback time is less than 10 seconds and may also levy a charge if the user notices an accompanying push message, attempts to access the advertisement page and makes the corresponding link advertisement be executed.

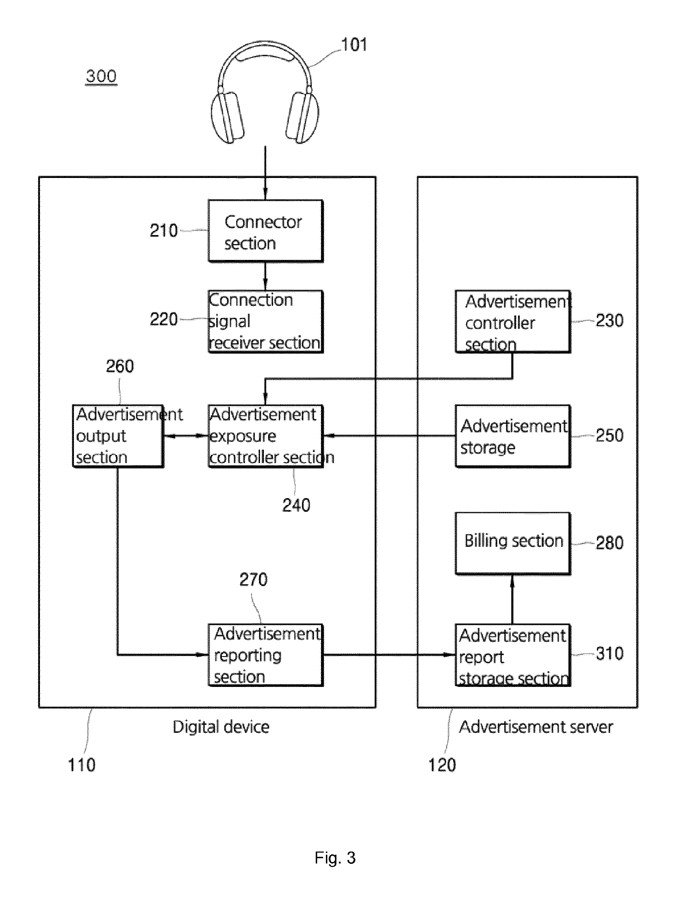

FIG 3 is a block diagram that illustrates a detailed configuration of an advertisement system using a connection signal of an audio output device of a digital device according to another embodiment of the present invention, particularly an embodiment, wherein an advertisement storage section is embedded in the advertisement server or the digital device 110 uses data communication.

As illustrated in FIG 3, an advertisement system 300 using a connection signal of an audio output device of a digital device according to another embodiment of the present invention is different from the advertisement system 100 illustrated in FIG 2 in that the advertisement system 300 includes an advertisement controller section 230 and an advertisement storage section 250 as well, and additionally includes an advertisement report storage section 310 and a billing section 280 also in the advertisement server 120, which will be now described considering the difference in between.

An advertisement system according to yet another embodiment of the present invention calls an advertisement directly from the advertisement server 120 and expose the advertisement while the digital device 110 implements data communication in real time.

Because typically the digital device 110 is always connected to data communication, an advertisement of such a case is not necessarily stored in a local database but may be called directly from the advertisement server 120.

For this purpose, the advertisement controller section 230 of the advertisement server 120, when receiving a connection signal from the connection receiver section 220 of the digital device 110, verifies advertisement exposure conditions such as priority, form, playback time, exposure number, target, etc. and transmits a control command including a resulting value according to the advertisement exposure conditions to the advertisement exposure controller section 240 of the digital device 110 to execute an exposure of the advertisement.

At this time, because the digital device 110 is connected in real time to the advertisement server 120 in terms of data communication, the digital device 110 directly calls, via the advertisement exposure controller section 240, an advertisement stored in the advertisement storage section 250 of the advertisement server 120, then downloads and outputs the advertisement in real time.

Correspondingly, an advertisement system according to yet another embodiment of the present invention outputs an advertisement by directly calling the advertisement stored in the advertisement server 120 without necessarily downloading in advance the advertisement from the advertisement server 120 and storing the advertisement in the digital device 110.

For this purpose, the advertisement output section 260 of the digital device 110 may modify, when downloading an advertisement from the advertisement server 120, the targeting information of the advertisement based on the personal information such as mobile carrier, mobile terminal, list of installed applications, date, month and year of birth, gender, etc. Meanwhile, the report data of an advertisement generated by the advertisement reporting section 270 of the digital device 110 is transmitted to the advertisement server 120 and stored in the advertisement report storage section 310 of the advertisement server 120.

The report data stored in the advertisement report storage section 310 may be used as fundamental data for billing a charge to the user.

The billing section 280 of the advertisement server 120 levies a charge based on the report data and according to the advertisement playback time. For this purpose, the billing section 280 levies a charge only when the entire advertisement is played back if the entire playback time of the advertisement is less than the predetermined reference period of time whereas the billing section levies a charge only when an advertisement is played back longer than the predetermined period of time if the entire playback time of the advertisement is equal to or more than the predetermined reference period of time.

In addition, the billing section 280 may levy a charge at the time a link advertisement is executed when the advertisement link area is selected in the advertisement page regarding the advertisement based on the report data.

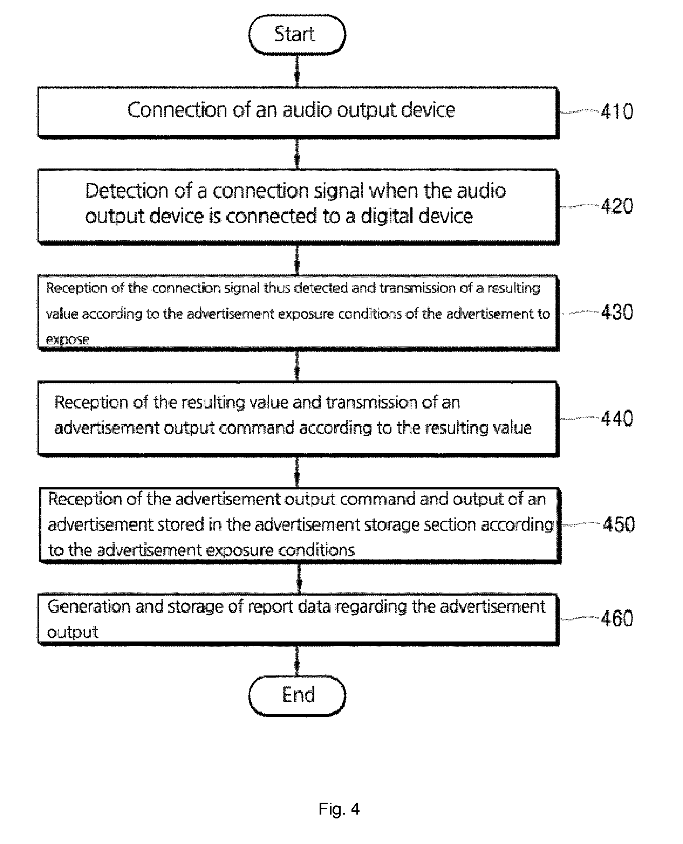

FIG 4 is a flowchart for an advertisement method using a connection signal of an audio output device of a digital device according to yet another embodiment of the present invention.

As illustrated in FIGs 2 through 4, in the first phase 410, the audio output device 101 is connected to the connector section 210 of the digital device 110.

In the second phase 420, the connection signal receiver section 220 of the digital device 110 detects a connection signal generated when the audio output device 101 is connected to the connector section 210.

Then in the third phase 430, the advertisement controller section 230 of the digital device 110 receives a connection signal detected by the connection signal receiver section 220 and transmits a resulting value according to the advertisement conditions of the advertisement to expose, wherein the advertisement controller section 230 may be embedded in the advertisement server 120.

In the fourth phase 440, the advertisement exposure controller section 240 of the digital device 110 receives the resulting value from the advertisement controller section 230 and transmits to the advertisement output section 260 an advertisement output command according to the resulting value.

In the fifth phase 450, the advertisement output section 260 of the digital device 110 receives from the advertisement exposure controller section 240 the advertisement output command and outputs, according to the advertisement exposure conditions, an advertisement that is stored in the advertisement storage section 250 and corresponds to the advertisement exposure purpose.

Meanwhile, the advertisement storage section 250 may be embedded either in the digital device 110 or the advertisement server 120 depending on whether or not the digital device 110 uses data communication. More specifically, if the digital device 110 uses no data communication, the advertisement storage section 250 may be embedded in the digital device 110, whereas, if the digital device 110 uses data communication, the advertisement storage section 250 along with the advertisement controller section 230 may be embedded in the advertisement server 120.

If the advertisement storage section 250 is embedded in the digital device 110, the advertisement storage section 250 downloads an advertisement from an advertisement server 120 and stores the advertisement via wireless communication with the advertisement server 120 during an idle time. Therefore, in this case, the advertisement output section 260 may expose an advertisement downloaded and stored in the advertisement storage section 250.

On the contrary, if the advertisement storage section 250 and the advertisement controller section 230 are embedded in the advertisement server 120, the advertisement output section 230 directly calls, downloads in real time and outputs an advertisement stored in the advertisement storage section 250 in the advertisement server 120 by linking the advertisement server 120 to the advertisement exposure controller section 240 via the advertisement controller section 230.

Then in the sixth phase 460, the advertisement reporting section 270 of the digital device 110 generates and stores the report data regarding an advertisement output off the advertisement output section 260, wherein the report data may be transferred to and stored in the advertisement report storage section 310 of the advertisement server 120.

Embodiments of the present invention include computer-readable media including programmed commands for executing actions executed in various computers. The computer-readable media may be a programmed command, a local data file, a local data structure or their combination. The computer-readable media may be either specifically designed for the purpose of the present invention or a medium that is well known and available to a person skilled in the software art. Examples of the computer-readable media include magnetic media such as hard disk drive, floppy disc, magnetic tape, optical recording media such as CD-ROM, DVD and magnetic-optical media such as floptical disc, hardware devices such as ROM, RAM, flash memory, etc. that are specifically configured in order to store and execute programmed commands. Programmed commands include machine language codes a complier, etc. makes as well as high-level language codes that may be executed by a computer via an interpreter, etc. The description thus far is nothing more than an exemplification of the technical thoughts of the present invention and a person skilled in the art of the present invention may modify such examples not deviating from the scope of the present invention. In this perspective, the scope of the present invention must not be limited to the embodiments described in the present specification and be established based on the scope of the claims and all the technical thoughts equivalent to the scope of the claims.

### Reference Numerals

- 101:: Audio output device
- 110:: Digital device
- 120:: Advertisement server
- 210:: Connector section
- 220:: Connection signal receiver section
- 230:: Advertisement controller section
- 240:: Advertisement exposure controller section
- 250:: Advertisement storage section
- 260:: Advertisement output section
- 270:: Advertisement reporting section
- 280:: Billing section
- 310:: Advertisement report storage section

## Claims

1. An advertisement system using a connection signal of an audio output device of a digital device including:
a connector section to which the audio output device is to connected;
a connection signal receiver section that detects the signals when the audio output device is connected to the connector section; and
an advertisement output section that outputs an advertisement when the connection signal receiver section detects the connection signal.

2. The advertisement system using a connection signal of an audio output device of a digital device of claim 1 additionally including:
an advertisement controller section that receives the connection signal detected by the connection receiver section and transmits a resulting value according to the exposure condition of the advertisement to expose;
an advertisement exposure controller section that receives the resulting value from the advertisement controller section and transmits to the advertisement output section an advertisement output command according to the resulting value; and
an advertisement storage section that stores a plurality of advertisements,
wherein the advertisement output section receives the advertisement output command from the advertisement exposure controller section and outputs the advertisement, stored in the advertisement storage section, to expose according to the advertisement exposure condition.

3. The advertisement system using a connection signal of an audio output device of a digital device of claim 2, wherein the advertisement controller section controls the advertisement exposure so that the duration from detecting the connection signal to beginning to expose the advertisement is modified.

4. The advertisement system using a connection signal of an audio output device of a digital device of claim 2, wherein the advertisement controller section controls the advertisement exposure so that, upon detecting the connection signal, the number of consecutive exposures of the advertisement is modified.

5. The advertisement system using a connection signal of an audio output device of a digital device of claim 2, wherein the advertisement controller section controls the advertisement exposure so that, if the audio output device is disconnected after outputting the advertisement and, after a certain period of time, the connection signal is detected when the audio output device is connected again, the continuous advertisement exposure time that is defined as the duration from the time the advertisement was finished to the time the advertisement will be output again is modified.

6. The advertisement system using a connection signal of an audio output device of a digital device of claim 2, wherein the advertisement controller section controls the advertisement exposure so that, when the connection signal is detected, the maximum number of advertisement output times is modified being limited with reference to the number of the audio output device is connected or a predetermined advertisement exposure number.

7. The advertisement system using a connection signal of an audio output device of a digital device of claim 2, wherein the advertisement controller section controls the advertisement exposure so that, if detecting the connection signal, the advertisement is not exposed if a specific audio or video program is being played in the digital device.

8. The advertisement system using a connection signal of an audio output device of a digital device of claim 2, wherein the advertisement storage section, if the advertisement storage section is embedded in the digital device, downloads an advertisement from an advertisement server and stores the advertisement via wireless communication with the advertisement server during an idle time whereas the advertisement output section, if the advertisement storage section and the advertisement controller section are embedded in the advertisement server, directly calls, downloads in real time and outputs an advertisement stored in the advertisement storage section in the advertisement server by linking the advertisement server to the advertisement exposure controller section via the advertisement controller section.

9. The advertisement system using a connection signal of an audio output device of a digital device of claim 8, wherein the advertisement output section modifies, when downloading an advertisement from the advertisement server, the targeting information of the advertisement based on the personal information including at least one among mobile carrier, mobile terminal, list of installed applications, date, month and year of birth and gender.

10. The advertisement system using a connection signal of an audio output device of a digital device of claim 1 additionally including an advertisement reporting section that generates report data on the advertisement that has been output by the advertisement output section; and an advertisement report storage section that stores the reporting data generated by the advertisement reporting section.

11. The advertisement system using a connection signal of an audio output device of a digital device of claim 10 additionally including a billing section that levies a charge according to the playback time of an advertisement based on the report data generated by the advertisement reporting section, wherein the billing section levies a charge only when the entire advertisement is played back if the entire playback time of the advertisement is less than the predetermined reference period of time whereas the billing section levies a charge only when an advertisement is played back longer than the predetermined period of time if the entire playback time of the advertisement is equal to or more than the predetermined reference period of time.

12. The advertisement system using a connection signal of an audio output device of a digital device of claim 10 additionally including a billing section that, based on the report data generated by the advertisement reporting section, levies a charge at the time a link advertisement is executed when the advertisement link area is selected in the advertisement page regarding the advertisement.

13. The advertisement system using a connection signal of an audio output device of a digital device of claim 1, wherein the connection signal is generated by an electronic connection that is a standby state so that the audio output device, when being either physically or logically connected to the digital device, is connected to an audio device recognition module embedded in the digital device in order to output an audio content.
